# EUROPEAN PATENT SPECIFICATION

(11) **EP 1 236 578 B1**
(45) Date of publication and mention of the grant of the patent: **24.12.2008**
(21) Application number: 02075781.1
(22) Date of filing: 21.02.2002
(51) Int. Cl.: B41J 2/175, B29C 33/44, B29C 35/02, B29C 45/40

(54) **Method and mold for manufacturing pellets of hot-melt ink**
Verfahren und Form zur Herstellung von Tabletten aus heissschmelzbarer Tinte
Procédé et moule pour la fabrication des pastilles d'encre thermofusible

(30) Priority: 23.02.2001 EP 01200691
(43) Date of publication of application: 04.09.2002
(73) Proprietor: Océ-Technologies B.V., 5914 CC Venlo (NL)
(72) Inventor: Hollands, Peter Joseph, 5991 PT Baarlo (NL); Schreurs, Wilhelmus Antonius Maria, 5935 BA Tegelen (NL); Willems, Guido Gerardus, 5921 VS Venlo (NL); Van Gerven, Antonius Johannes Jozef, 5971 AK Grubbenvorst (NL); Ramekers, Reinier Jan, 5807 BM Oostrum (NL)
(74) Representative: Hanneman, Henri W.A.M.

(56) References cited:
- EP-A- 0 820 872
- DE-A- 4 418 452
- PATENT ABSTRACTS OF JAPAN vol. 014, no. 046 (M-0926), 26 January 1990 (1990-01-26) & JP 01 275022 A (MAZDA MOTOR CORP), 2 November 1989 (1989-11-02)

## Description

The invention relates to a method and a mold for manufacturing pellets of hot-melt ink. Certain types of inkjet printers employ a so-called hot-melt ink i.e. a wax-like ink material that is solid at room temperature and has a melting point in the order of 80 to 150°C, for example. In the printhead of the printer, the ink is heated above its melting point, so that droplets of liquid ink can be expelled through the nozzles of the printhead. In order to obtain a high quality of the printed image, the viscosity and hence the temperature of the molten ink in the printhead should be kept essentially constant. However, since the ink is consumed in the course of the printing process, and the ink reservoir accommodating the liquid ink within the printhead is preferably of a limited size, it is necessary to supply and melt solid ink while the printer is operating. The latent heat requires for melting the ink tends to decrease the temperature in the ink reservoir. For this reason, it is desirable that the amount of solid ink supplied to the ink reservoir can precisely be controlled an metered, and, to this end, it is advantageous that the ink is supplied in the form of pellets having a predetermined size and shape, e.g. in the form of small spherical pills or pellets.

Since the hot-melt ink is a thermoplastic material, the pellets having the desired shape and size can be manufactured by means of a molding process similar to injection molding processes known for manufacturing articles from thermoplastic resin. The molding process should however be adapted to the specific properties of hot melt ink, which are in certain respects different from those of thermoplastic synthetic resin. Since the amount of shrinkage, which the hot-melt ink experiences when it is solidified, is comparatively low, and since a certain shrinkage can be tolerated because the final appearance of molded ink pellets is not critical, it is not necessary to apply high locking forces for keeping the mold closed during the molding process. On the other hand, since the hot-melt ink has a relatively high melting point, it tends to solidify immediately when it comes into contact with the walls of the mold cavity. This effect and the fact that the surface of the ink pellet is somewhat tacky even when the temperature has dropped below the melting point, increases the tendency of the pellet to adhere to walls of the mold cavity. This makes it more difficult to reliably and reproducingly remove the molded pellet from the molding die. Especially when the upper and lower dies of the mold are symmetrical, as must be the case for example when the pellet has a spherical shape, it is not predictable whether the pellet will adhere to the upper die or to the lower die when the dies of the molds are separated. This tends to reduce the productivity of the molding process and/or necessitates the use of complex mechanisms for ejecting the molded product out of the die.

It is well known that the removal of a molded product from a die can be facilitated by employing a separating agent which reduces the adherence between the molded product and the walls of the mold cavity. Then, however, a portion of the separating agent will inevitably be dispersed or diluted in the molten material, and this is not acceptable in the case of hot-melt ink, because it would deteriorate the quality of the ink. For example, even minute particles of the separating agent, when dispersed in the ink, would tend to clog the extremely fine nozzles of the printhead or would change the ink properties such as surface tension or crystallization.

It is an object of the invention to provide a method for manufacturing pellets of hot-melt ink, in which the pellets can reliably and reproducibly be withdrawn from the mold cavity.

According to the invention, this object is achieved by a method comprising the steps of:
- filling molten ink into a mold cavity defined between a first die and a second die of a mold,
- allowing the ink to cool down and to solidify in the mold cavity, and
- heating at least one of the first and second dies for remelting only the surface of the ink pellet to be removed from the mold cavity.

According to the invention, the molded pellet is separated from the wall of the mold cavity by heating at least a portion of the mold, so that a surface layer of the pellet is remelted. This can be achieved within a very short time. Thus, it is possible to remove the pellet from the mold cavity efficiently and in a well-defined manner. Since it is not necessary to employ a separating agent, the quality of the hot-melt ink will not be degraded.

More specific features of the invention are indicated in the dependent claims, When the lower die of the mold is heated before the upper and lower dies are separated, it is possible to positively release the pellet from the lower die and to withdraw it from the lower die, taking advantage of the fact that the pellet tends to adhere to the upper die which is not heated. Then, the pellet is released from the upper die by any suitable means, thereby allowing the pellet to simply drop out of the upper die. The pellets dropping out of the upper dies may be collected by any suitable collection means such as a chute which is brought in position underneath the pellets that have been withdrawn from the lower dies.

Further, it is possible to release the pellet from the upper die by heating the latter. In a preferred embodiment, the method comprises the steps of first heating the lower die, then separating the upper and lower dies with the pellets adhering to the upper die, and heating the upper die, thereby allowing the pellet to drop out. The release of the pellet from the upper die may be assisted and accelerated by blowing air into the runner hole of the upper die. As an alternative, an ejector pin may be inserted through the runner hole. In this case, the ejector pin may be arranged stationary, so it enters into the runner hole and engages the pellet adhered thereto when the upper die and the pellet are lifted from the lower die.

A mold for manufacturing pellets of hot-melt ink in accordance with the method described above comprises first and second dies defining a mold cavity, wherein at least one of the first and second dies has a wall thickness which is smaller than half the diameter of the mold cavity. If the mold cavity is not spherical, the wall thickness of the die is smaller than half the average diameter.

Due to the small wall thickness, the die has a very low heat capacity, such that the surface layer of the molded pellet can be remelted very quickly by heating the die. The small heat capacity of the die has the further advantage that the molten ink in the mold cavity can be cooled and solidified more rapidly, so that the productivity of the molding process is increased.

Preferably, both dies of the mold have a small wall thickness and hence a small heat capacity and are made of a material having a high heat conductivity, e.g. aluminium. Also stainless steel is useable if the wall thickness is small enough. In a preferred embodiment, the wall thickness of the dies is smaller than a quarter of the diameter of the mold cavity. For example, if the mold cavity is spherical and has a diameter in the order of 10 mm, the wall thickness of the dies may be 1.5 mm or less.

Rapid cooling and re-heating of the dies may be achieved in a very simple manner e.g. by blowing cold and hot air or even a liquid against the dies. A number of other heating or cooling devices can be used.

A preferred embodiment of the invention will now be described in conjunction with accompanying drawings, in which:

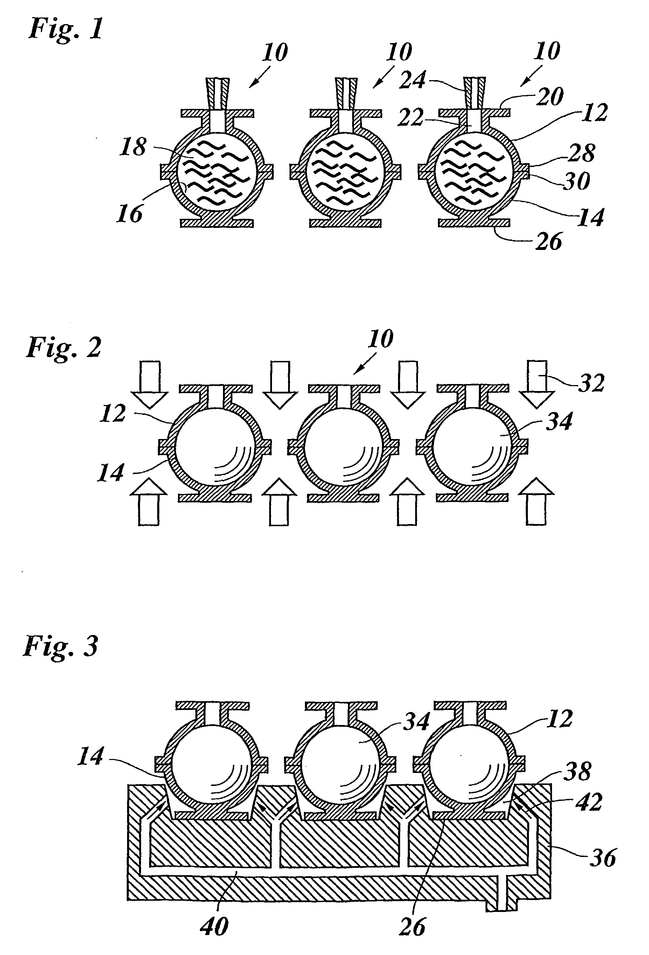

Figures 1 to 5 illustrate successive steps of a process for molding hot-melt ink pellets and removing them from the mold cavity.

Figure 1 shows a group of three molds 10, each of which comprises an upper die 12 and a lower die 14 which each have a semi-spherical cup shape and, together, define a mold cavity 16 which is filled with molten hot-melt ink 18. The upper die 12 is integrally formed with a top flange 20 and has a runner hole 22 formed in the centre of the flange 20, so that molten ink can be poured into the mold cavity 18 through a nozzle 24.

The lower die 14 is essentially mirror-symmetric relative upper die 12 and is supported on a bottom 26 formed integrally therewith. The lower edge of the upper die 12 and the upper edge of the lower die 14 are surrounded by circumferential flanges 28, 30 which are held in firm engagement with one another in order to sealingly close the mold cavity 16.

When the ink 18 has been poured in, as is shown in figure 1, the molds are transferred to a cooling stage illustrated in figure 2, where cold air 32 is blown against the outer surfaces of the dies 12,14 from above and below, so that the ink in the mold cavities is cooled and solidified to form spherical pellets 34.

Then, the molds 10 are transferred to a first heating stage which has been shown in figure 3. This heating stage comprises a heating block 36 having a number of recesses 38 for accommodating the lower dies 14 of the molds. The recesses 38 have a flat bottom, which defines a large contact area with the bottom flanges 26 of the lower dies 14. Hot air is supplied into a system of passages 40 formed in the heating block 36 and is evenly blown out against the circumferential walls of the lower dies 14 of each mold 10, as is symbolized by arrow 42. The dies 12,14 of the molds 10 are made of aluminium and have relatively thin walls (at least in the portion defining the mold cavity),

so that their heat capacity is low, whereas the heat conductivity is high. As a result, the hot air blown against the walls of the dies 14 will rapidly rise the temperature of these dies, and surface layers of the pellets 34 facing the lower dies 14 will be re-melted, so that the pellets 34 can easily be released from the lower dies 14. However, since the upper dies 12 have not been heated, the solidified material of the pellets 34 still adheres to the upper die 12. Since the heating block 36 is constantly kept at a high temperature (e.g. by the hot air passing therethrough), heating of the lower die 14 is accelerated by heat radiation and thermal contact between the block 36 and the bottom flange 26.

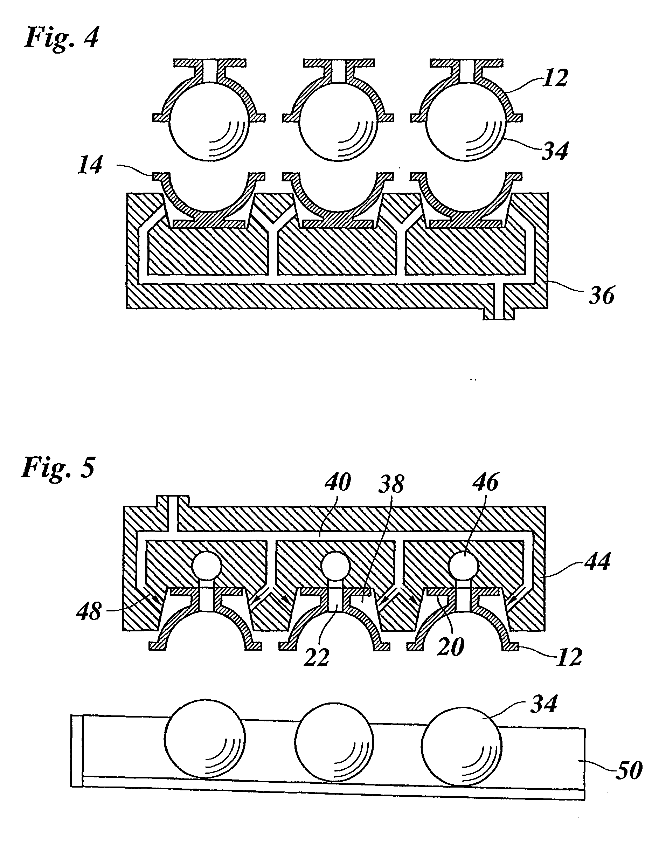

Then, as is shown in figure 4, the upper and lower dies of each mold 10 are separated from one another, either by lifting the upper dies 12 or by lowering the heating block 36 and the lower dies 14. Since the pellets 34 stick to the upper dies 12, they are withdrawn from the lower dies 14.

Finally, the upper dies 12 with the pellets 34 held therein are transferred to a second heating stage shown in figure 5. This heating stage comprises a heating block 44 which has essentially the same configuration as the heating block 36 described above, but is arranged in an inverted position so that the recesses 38 face downward for accommodating the top flanges 20 of the upper dies 12. In addition to the system of passages 40 for blowing hot air against the outer surfaces of the dies 12, the heating block 44 has another air supply system 46 through which air can be blown with a suitable pressure into the runner holes 22 of the dies 12. Again, by blowing hot air, symbolized by arrows 48, against the dies 12, surface layers of the pellets 34 are remelted, so that the pellets will no longer adhere to the dies 12 but will drop down into a chute 50. This process is assisted and accelerated by blowing pressurized air into the runner holes 22. Thus, the molding process for manufacturing the pellets 34 is completed, and the upper and lower dies 12, 14 may be re-circulated for being used in another molding cycle.

Although not shown in the drawings, the dies 12,14 of the molds 10, the total number of which may be significantly larger than three, may be mounted to an endless conveyor in any known manner allowing to hold the molds 10 closed in the step illustrated in figures 1 to 3 and to move the upper dies 12 and the lower dies 14 relative to one another in vertical direction in the step illustrated in figures 4. Thus, the process described above lends itself to an efficient mass production of hot-melt ink pellets 34.

## Claims

1. Method for manufacturing pellets (34) of hot-melt ink, **characterized by** the steps of:
- filling molten ink (18) into a mold cavity (16) defined between a first die (12) and a second die (14) of a mold (10),
- allowing the ink (18) to cool down and to solidify in the mold cavity (16), and
- heating at least one of the first and second dies (12, 14) for re-melting only the surface of the ink pellet (34) to be removed from the mold cavity (16).

2. Method according to claim 1, wherein the first and second dies (12, 14) are arranged to be separated from one another in a vertical direction, and wherein the lower die (14) is heated so that the ink pellet (34) will adhere to the upper die (12) when the dies are separated, and the pellet (34) is then ejected from the upper die (12).

3. Method according to claim 2 , wherein the ejection of the pellet (34) from the upper die (12) is caused or at least assisted by blowing air into the part of the mold cavity (16) defined by the upper die (12) or by an ejector pin.

4. Method according to claim 3, wherein the air is blown into the mold cavity through a runner hole (22) which is formed in the upper die (12) for allowing the mold cavity to be filled with the liquid ink (18).

5. Method according to any of the claims 2 to 4 wherein the ejection of the ink pellet (34) from the upper die (12) is caused or at least assisted by heating the upper die (12).

6. Method according to any of the preceding claims, wherein heating of at least one of the first and second dies (12, 14) is achieved by blowing hot air (42, 48) against the outer surface of the die.

7. Method according to any of the preceding claims, wherein the molten ink (18) is cooled and solidified by blowing cold air (32) against the outer surfaces of the dies (12, 14).

8. Mold for manufacturing pellets (34) of hot-melt ink, the mold comprising first and second dies (12, 14) defining a mold cavity (16) and being separable from one another, **characterized in that** at least one of the dies (12, 14) has a wall having a thickness which is smaller than half the average diameter of the mold cavity (16) and is adapted to be heated for re-melting only the surface of the ink pellet (34) to be removed from the mold cavity.

9. Mold according to claim 8 wherein both dies (12, 14) are essentially cup-shaped and have a wall thickness smaller than 2.0 mm.

10. Mold according to claim 1 or 2 wherein the dies (12, 14) are made of a metal or a metal alloy.

## Patentansprüche

1. Verfahren zur Herstellung von Pellets (34) aus heißschmelzender Tinte, **gekennzeichnet durch** die folgenden Schritte:
- Einfüllen von geschmolzener Tinte (18) in einen Formhohlraum (16), der zwischen einem ersten Formwerkzeug (12) und einem zweiten Formwerkzeug (14) einer Gießform (10) gebildet wird,
- Abkühlenlassen und Erstarrenlassen der Tinte (18) in dem Formhohlraum (16) und
- Erhitzen wenigstens eines der ersten und zweiten Formwerkzeuge (12. 14), um nur die Oberfläche des Tintenpellets (34), das aus dem Formhohlraum (16) zu entnehmen ist, wieder aufzuschmelzen.

2. Verfahren nach Anspruch 1, bei dem die ersten und zweiten Formwerkzeuge (12, 14) so angeordnet werden, daß sie in einer vertikalen Richtung voneinander getrennt werden können, und bei dem das untere Formwerkzeug (14) erhitzt wird, so daß das Tintenpellet (34) an dem oberen Formwerkzeug (12) haftet, wenn die Formwerkzeuge getrennt werden, und wobei das Pellet (34) dann aus dem oberen Formwerkzeug (12) ausgeworfen wird.

3. Verfahren nach Anspruch 2, bei dem das Auswerfen des Pellets (34) aus dem oberen Formwerkzeug (12) durch Einblasen von Luft in den durch das obere Formwerkzeug (12) begrenzten Teil des Formhohlraums (16) oder mit Hilfe eines Auswerferstiftes bewirkt oder zumindest unterstützt wird.

4. Verfahren nach Anspruch 3, bei dem das Einblasen der Luft in den Formhohlraum durch ein Angußloch (22) erfolgt, das in dem oberen Formwerkzeug (12) gebildet ist und es erlaubt, den Formhohlraum mit flüssiger Tinte (18) zu befüllen.

5. Verfahren nach einem der Ansprüche 2 bis 4, bei dem das Auswerfen des Tintenpellets (34) aus dem oberen Formwerkzeug (12) durch Erhitzen des oberen Formwerkzeugs (12) bewirkt oder zumindest unterstützt wird.

6. Verfahren nach einem der vorstehenden Ansprüche, bei dem das Erhitzen wenigstens eines der ersten und zweiten Formwerkzeuge (12, 14) durch Anblasen der äußeren Oberfläche des Formwerkzeugs mit heißer Luft (42, 48) bewirkt wird.

7. Verfahren nach einem der vorstehenden Ansprüche, bei dem man die geschmolzene Tinte (18) abkühlen und erstarren läßt, indem die äußeren Oberflächen der Formwerkzeuge (12, 14) mit kalter Luft (32) angeblasen werden.

8. Form zur Herstellung von Pellets (34) aus heißschmelzender Tinte, mit ersten und zweiten Formwerkzeugen (12, 14), die einen Formhohlraum (16) begrenzen und voneinander trennbar sind, **dadurch gekennzeichnet, daß** wenigstens eines der Formwerkzeuge (12, 14) eine Wand mit einer Dicke aufweist, die kleiner ist als die Hälfte des mittleren Durchmessers des Formhohlraums (16) ist, und beheizbar ist, um nur die Oberfläche des aus dem Formhohlraum zu entfernenden Tintenpellets (34) wieder aufzuschmelzen.

9. Verfahren nach Anspruch 8, bei dem beide Formwerkzeuge (12, 14) im wesentlichen becherförmig sind und eine Wanddicke aufweisen, die kleiner ist als 2,0 mm.

10. Form nach Anspruch 8 oder 9, bei der die Formwerkzeuge (12, 14) aus Metall oder einer Metallegierung bestehen.

## Revendications

1. Procédé de fabrication de pastilles (34) d'encre thermofusible, **caractérisé en ce qu'**il comprend les étapes suivantes :
- remplir d'encre fondue (18) une cavité de moule (16) délimitée entre une première matrice (12) et une seconde matrice (14) d'un moule (10),
- laisser l'encre (18) refroidir et se solidifier dans la cavité du moule (16), et
- chauffer au moins l'une des première et seconde matrices (12, 14) pour faire fondre à nouveau uniquement la surface de la pastille d'encre (34) que l'on doit retirer de la cavité du moule (16).

2. Procédé selon la revendication 1, dans lequel les première et seconde matrices (12, 14) sont disposées de manière à être séparées l'une de l'autre dans une direction verticale, et dans lequel la matrice inférieure (14) est chauffée de sorte que la pastille d'encre (34) adhère à la matrice supérieure (12) lorsque les matrices sont séparées et la pastille (34) est ensuite éjectée de la matrice supérieure (12).

3. Procédé selon la revendication 2, dans lequel l'éjection de la pastille (34) de la matrice supérieure (12) est provoquée ou au moins favorisée en soufflant de l'air dans la partie de la cavité du moule (16) définie par la matrice supérieure (12) ou par une broche d'éjecteur.

4. Procédé selon la revendication 3, dans lequel l'air est soufflé dans la cavité du moule à travers un trou de coulée (22) qui est formé dans la matrice supérieure (12) pour permettre de remplir la cavité du moule d'encre liquide (18).

5. Procédé selon l'une quelconque des revendications 2 à 4, dans lequel l'éjection de la pastille d'encre (34) de la matrice supérieure (12) est provoquée ou tout au moins favorisée par le chauffage de la matrice supérieure (12).

6. Procédé selon l'une quelconque des revendications précédentes, dans lequel le chauffage d'au moins l'une des première et seconde matrices (12, 14) est effectué en soufflant de l'air chaud (42, 48) contre la surface externe de la matrice.

7. Procédé selon l'une quelconque des revendications précédentes, dans lequel l'encre fondue (18) est refroidie et solidifiée en soufflant de l'air froid (32) contre les surfaces externes des matrices (12, 14).

8. Moule permettant de fabriquer des pastilles (34) d'encre thermofusible, le moule comprenant des première et seconde matrices (12, 14) définissant une cavité de moule (16) et pouvant être séparées l'une de l'autre, **caractérisé en ce qu'**au moins l'une des matrices (12, 14) a une paroi ayant une épaisseur inférieure à la moitié du diamètre moyen de la cavité du moule (16) et adaptée pour être chauffée afin de faire fondre à nouveau uniquement la surface de la pastille d'encre (34) qui doit être retirée de la cavité du moule.

9. Moule selon la revendication 8, dans lequel les deux matrices (12, 14) ont sensiblement la forme de coupelles et ont une épaisseur de paroi inférieure à 2,0 mm.

10. Moule selon la revendication 8 ou 9, dans lequel les matrices (12, 14) sont constituées d'un métal ou d'un alliage métallique.
